# DEMANDE DE BREVET EUROPEEN

(11) **EP 1 541 013 A1**
(43) Date de publication de la demande: **15.06.2005**
(21) Numéro de dépôt: 03028492.1
(22) Date de dépôt: 12.12.2003
(51) Int. Cl.: A01G 25/02, B29C 47/02

(54) **Procédé de fabrication de tuyaux d'irrigation goutte-à-goutte**

(71) Demandeur: The Thomas Machines SA, 2108 Couvet (CH)
(72) Inventeur: Bernauer, Thomas, 2000 Neuchâtel (CH); Kertscher, Eberhard, 1462 Yvonand (CH)
(74) Mandataire: Ravenel, Thierry Gérard Louis

(57) **Abrégé**

L'invention concerne un goutteur (4) pour un tuyau d'irrigation goutte-à-goutte (1) le goutteur (4) comprenant un corps ayant une face extérieure (5) destinée à venir en contact avec la paroi intérieure du tuyau (1) et une face intérieure orientée vers l'intérieur du tuyau (1), et dans lequel ladite face extérieure (5) comporte une chambre de collecte (6) ouverte en direction de la paroi intérieure du tuyau (1) pour communiquer avec un orifice de décharge (2) ménagé dans ladite paroi du tuyau (1), ledit goutteur (4) comprenant en outre des moyens d'écoulement prévus dans ledit corps pour former un passage (8,9) dans lequel un liquide peut s'écouler entre ladite face intérieure et ladite chambre de collecte (6), caractérisé en ce que la chambre de collecte (6) comprend un organe saillant faisant (10) saillie au-delà de ladite face extérieure (5).

## Description

La présente invention est relative à un procédé de fabrication de tuyaux d'irrigation goutte-à-goutte.

Il est de technique courante d'utiliser, pour certaines irrigations, des tuyaux dits "goutte-à-goutte". Il s'agit de tuyaux dont la paroi est percée, à des intervalles fixés à l'avance, par des trous de petits diamètres, par lesquels s'écoule l'eau dans le sol. Pour contrôler avec précision le débit des trous, on prévoit un limiteur de débit, couramment appelé "goutteur", qui se compose d'une pièce de matière plastique, qui est collée sur la paroi interne du tuyau. Cette pièce présente, du côté tourné vers la paroi intérieure du tuyau, une partie en creux, qui forme une chambre de collecte. Cette chambre de collecte est reliée à l'espace intérieur du tuyau par un conduit à pertes de charge calculées, par exemple un conduit formant labyrinthe. Ce labyrinthe est constitué par une rainure préparée à l'avance sur la face du goutteur qui est destinée à être tournée vers la face interne du tuyau.

Dans la pratique, dans la plupart des cas, un tel tuyau d'irrigation est fabriqué de la manière suivante :

Du polymère, vu polyéthylène en général, est envoyé dans une extrudeuse et celle-ci produit, en continu, et via une tête de formage, un tube dans les dimensions voulues. Dès que le tube, encore chaud, sort de la tête d'extrusion, un goutteur, amené à travers la tête d'extrusion, est pressé contre la paroi intérieure du tube et se colle contre celui-ci en fondant localement.

Une fois l'ensemble tuyau-goutteur refroidi dans un bac à eau, un trou est percé dans la paroi du tuyau, au droit de la chambre de collecte. Aujourd'hui, cette opération est exécutée de la manière suivante :

Pour pouvoir percer au bon endroit, on doit détecter le début d'un goutteur dans le tuyau. Vu que le tube, à l'endroit où se trouve un goutteur, est plus épais que le tuyau seul, on détecte le début du goutteur dans le tube en écrasant le tube à paroi mince par un moyen mécanique, par exemple entre deux rouleaux pressés l'un contre l'autre par un ressort. Dès qu'un goutteur passe entre les rouleaux, ceux-ci doivent se déplacer pour faire la place au goutteur. Ce déplacement est détecté par un capteur électrique et utilisé comme signal pour une perceuse qui percera l'ouverture dans le tuyau afin de créer un passage entre l'intérieur du tuyau et l'extérieur via le goutteur.

Le perçage d'une ouverture dans le tuyau est ensuite exécuté par des moyens classiques et mécaniques (foret et perceuse).

Une telle installation et un tel procédé de fabrication de tuyaux d'irrigation goutte à goutte sont connus notamment du brevet EP 0 344 605.

Ce procédé présente toutefois de nombreux inconvénients. En effet, comme la détection de la présence d'un goutteur nécessite un déplacement d'un élément mécanique ayant une masse, l'inertie de cet élément limite la vitesse et la précision de la détection du début du goutteur ainsi que la cadence de perçage.

Le perçage prend un certain temps. Vu que le tuyau avance pendant ce temps, le système de perçage doit, pendant le temps de perçage, suivre le tuyau avec la vitesse de celui-ci. Il en résulte un appareillage compliqué et coûteux.

Par ailleurs, on doit faire observer que le perçage est une opération où l'on enlève de la matière, soit sous forme d'une rondelle correspondant au trou, soit sous forme de copeaux. L'évacuation de cette matière ne peut pas être assurée à 100 %, d'où des fréquents arrêts de production. Il est à noter qu'un polymère, plus précisément le polyéthylène utilisé pour ces tuyaux, est plus difficile à percer que, par exemple, un métal : le polyéthylène fond facilement sous la chaleur créée par la friction du foret et "gèle" sur l'outil qui, ensuite, ne coupe plus.

De plus, ce perçage mécanique ne permet guère de dépasser une cadence de 200 trous par minute, ce qui limite de la même façon la vitesse d'obtention de tuyaux, typiquement à environ 80 mètres/minute.

Une installation et un procédé pour la fabrication d'un tuyau d'irrigation goutte à goutte visant à éliminer les inconvénients liés au perçage mécanique ont été proposés dans le document EP 0 715 926. Selon ce document, le perçage n'est pas réalisé à l'aide de moyens mécaniques mais au moyen d'un laser. Bien que ce perfectionnement permette de doubler la cadence de perçage, et donc de réduire le pas entre les goutteurs pour une même vitesse d'extrusion par rapport à l'installation décrite dans le document EP 0 344 605, il présente encore de nombreux inconvénients. En effet, il est notamment toujours nécessaire d'utiliser un dispositif de détection des goutteurs et de prévoir un système complexe, utilisant des miroirs basculants, pour réaliser le perçage alors que le tuyau avance. Ces équipements sont lourds, compliqués et relativement coûteux, ce qui renchérit de manière importante le coût de ces installations. A titre indicatif, le coût des dispositifs de détection des goutteurs et de perçage laser représente typiquement environ 30% du coût de l'installation complète.

Compte tenu de ce qui précède, il existe un besoin pour une installation pour la fabrication de tuyaux d'irrigation goutte à goutte qui s'affranchisse des dispositifs compliqués et coûteux de l'art antérieur pour réaliser la mise en communication de la chambre de collecte des goutteurs avec l'extérieur.

La présente invention a donc pour but principal de supprimer ou pour le moins de réduire ces inconvénients, et de fournir un système de perçage simple qui permette notamment d'obtenir des cadences élevées lors de la fabrication de tuyaux d'irrigation du type "goutte-à-goutte".

A cet effet, l'invention a pour objet un goutteur pour un tuyau d'irrigation goutte-à-goutte comprenant un corps ayant une face extérieure destinée à venir en contact avec la paroi intérieure du tuyau et une face intérieure orientée vers l'intérieur du tuyau, et dans lequel ladite face extérieure comporte une chambre de collecte ouverte en direction de la paroi intérieure du tuyau pour communiquer avec un orifice de décharge ménagé dans ladite paroi du tuyau, ledit goutteur comprenant en outre des moyens d'écoulement prévus dans ledit corps pour former un passage dans lequel un liquide peut s'écouler, notamment avec un faible débit prédéterminé, entre ladite face intérieure et ladite chambre de collecte, ce goutteur étant caractérisé en ce que la chambre de collecte comprend un organe saillant faisant saillie au delà de ladite face extérieure.

Grâce à ces caractéristiques, lorsque le goutteur est pressé contre la paroi intérieure du tube et se colle contre celui-ci en fondant localement, l'organe saillant déforme le tuyau et crée une protubérance locale au droit de la chambre de collecte. Cette protubérance qui s'étend localement au delà de la surface du tuyau peut ainsi être aisément coupée par des moyens mécaniques simples pour former l'orifice de décharge mettant en communication la chambre de collecte de chaque goutteur avec l'extérieur. Par moyens mécaniques simples, on peut notamment prévoir un outil de coupe fixe disposé sur le chemin de défilement du tuyau et ainsi s'affranchir des moyens de détection et de perçage compliqués et coûteux de l'art antérieur. Selon une variante, on peut également envisager un outil mobile en rotation tel qu'une fraise ou analogue. On notera également que l'utilisation de goutteurs selon l'invention permet d'augmenter la cadence de fabrication des tuyaux par rapport à l'art antérieur dans la mesure où l'on s'affranchit des limitations, liées aux dispositifs de détection et de perçage par foret ou laser, qui résultent de la vitesse de défilement du tuyau. En d'autres termes, il n'est plus nécessaire de prévoir des moyens permettant au dispositif de perçage d'accompagner le tuyau à sa vitesse de défilement pour réaliser le perçage.

L'invention a également pour objet un tuyau d'irrigation goutte-à-goutte comportant une pluralité d'orifices de décharge espacés les uns des autres le long de sa longueur ainsi qu'une pluralité de goutteurs tels que définis ci-dessus, lesdits goutteurs étant fixés à la paroi intérieure dudit tuyau de manière que la chambre de collecte de chaque goutteur soit en regard d'un orifice de décharge. Selon une caractéristique avantageuse, le bord de chaque orifice de décharge vient en contact avec l'organe saillant du goutteur auquel il est associé pour former avec ce dernier un dispositif à clapet dans lequel le clapet est formé par la partie de tuyau s'étendant à la périphérie de l'orifice de décharge et qui s'appuie élastiquement sur l'organe saillant pour obturer cet orifice lorsque qu'aucun liquide ne circule dans le tuyau. En revanche ce bord peut s'écarter de l'organe saillant et laisser un passage pour le fluide lorsque qu'un fluide sous pression circule dans le tuyau. Cette configuration, permet avantageusement de limiter, sinon d'empêcher, toute pénétration de saletés dans la chambre de collecte qui pourrait conduire à un blocage de l'écoulement du fluide.

Selon un autre aspect, l'invention a également pour objet un procédé de fabrication de tuyaux d'irrigation goutte-à-goutte conforme à la revendication 8.

Selon encore un autre aspect, l'invention a pour objet une installation d'extrusion destinée à la fabrication de tuyaux d'irrigation goutte à goutte conforme à la revendication 13.

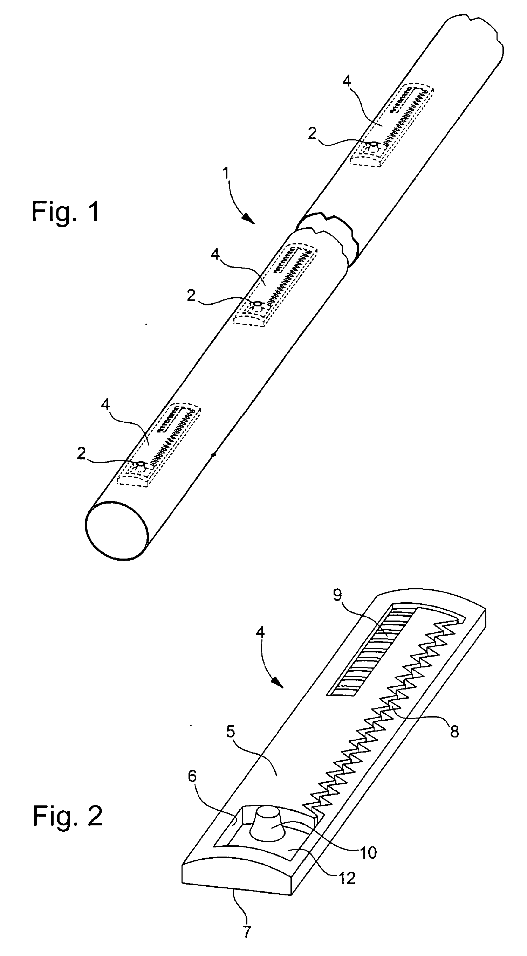

L'invention va maintenant être exposée de façon plus détaillée à l'aide d'un exemple pratique, illustré avec les dessins, parmi lesquels :
- a figure 1 est une vue en perspective schématique d'un tuyau d'irrigation qui peut être obtenu par le procédé de l'invention;
- la figure 2 est une vue en perspective d'un goutteur selon l'invention vu de dessus, avant sa mise en place dans le tuyau d'irrigation ;
- la figure 3 est une vue schématique d'une installation de fabrication de tuyaux d'irrigation conforme à l'invention ;
- la figure 4 est une représentation schématique partielle et en coupe du poste d'extrusion, du poste de calibrage et du poste de refroidissement de l'installation illustrée à la figure 3 ;
- la figure 5 est une coupe dans la région du galet presseur du poste de calibrage selon la ligne V-V de la figure 4 ;
- la figure 6 est une coupe partielle dans la région de liaison du goutteur avec le tuyau ;
- la figure 7 est une vue en perspective du poste de découpe de l'installation illustrée à la figure 3 ;
- la figure 8 est une vue partielle en coupe du tuyau d'irrigation avant l'entrée dans le poste de découpe représenté à la figure 7 ;
- les figures 9a et 9b sont respectivement des vues partielles de côté et de face représentant le tuyau d'irrigation juste avant l'opération de découpage de la protubérance dans un poste de découpe selon un premier mode de réalisation de l'invention;
- les figures 10a et 10b sont respectivement des vues partielles de côté et de face représentant le tuyau d'irrigation à la sortie du poste de découpe représenté à la figure 7, et
- les figures 11a et 11b sont respectivement des vues partielles de côté et de face représentant le tuyau d'irrigation juste avant l'opération de découpage de la protubérance dans un poste de découpe selon un deuxième mode de réalisation de l'invention.

La figure 1 montre un tuyau d'arrosage 1, en matière plastique, par exemple en polyéthylène, qui présente, à intervalle régulier, des trous ou orifices de décharge 2, par lesquels l'eau peut s'écouler pour arroser des végétaux (non représentés). Au voisinage des trous 2 sont placés, à l'intérieur du tuyau, et donc non visibles depuis l'extérieur, des goutteurs 4 dont la structure est explicitée à l'aide de la figure 2.

Le goutteur est une pièce en matière plastique, en principe de même composition que celle du tuyau 1, encore que cela ne soit pas obligatoire. Le goutteur 4 présente généralement un corps en forme de parallélépipède allongé, avec une surface "extérieure" 5, qui présente, en section transversale, une forme incurvée correspondant à la courbure de la paroi intérieure du tuyau 1. Dans cette surface 5 est découpée, au voisinage du centre, une chambre de collecte 6, située dans l'exemple représenté sensiblement dans une partie extrême et qui n'atteint pas la face opposée 7 du goutteur. Comme cela ressort de la figure 2, dans la surface 5 est creusé un canal 8 formant un labyrinthe qui relie la chambre de collecte 6 à un passage 9, situé à une autre extrémité du goutteur 4, et qui traverse le goutteur, pour déboucher sur la face opposée, ou interne 7 du goutteur. Le passage 9 et le canal 8 forment ainsi des moyens d'écoulement dans lesquels un liquide peut s'écouler avec un faible débit prédéterminé entre la face intérieure 7 et la chambre de collecte 6.

Dans le tuyau terminé, le goutteur 4 est soudé, ou de préférence thermo-soudé, par toute sa surface extérieure 5, sur la face intérieure du tuyau 1. Le trou 2, qui traverse la paroi du tuyau 1, débouche dans la chambre de collecte 6. On comprendra que l'eau contenue à l'intérieur du tube 1 s'écoule vers l'extérieur en passant par les passages 9, le canal 8, la chambre de collecte 6 et les trous 2.

Le goutteur 4 selon l'invention comprend en outre un organe saillant 10 faisant saillie au delà de la surface extérieure 5 à partir du fond 12 de la chambre de collecte 6. Dans l'exemple représenté, l'organe saillant 10 présente la forme d'un tronc de cône et vient de matière avec le goutteur. L'organe saillant 10 est par ailleurs réalisé de la même matière que le corps du goutteur 4. Le goutteur selon l'invention peut donc être typiquement obtenu par les techniques classiques de moulage par injection.

Il est bien entendu que selon une variante, l'organe saillant 10 pourrait présenter tout autre forme dès lors qu'il fait saillie au dessus de la face extérieure 5 du goutteur. On pourrait également envisager que l'organe saillant s'étende non pas directement depuis le fond de la chambre de collecte mais d'une paroi latérale de cette chambre, étant toujours entendu qu'il présente une forme telle qu'il comprenne une portion qui s'étende au-dessus de la face extérieure 5. Selon une variante de réalisation, l'organe saillant 10 pourrait être rapporté dans la chambre de collecte 6 et fixé dans cette dernière par tout moyen approprié tel que par collage, soudage ou analogue.

La hauteur de dépassement de l'organe saillant 10 au dessus de la surface extérieure 5 va dépendre de l'épaisseur de la paroi du tuyau sur laquelle le goutteur doit être soudé. Typiquement, l'organe saillant 10 s'étend entre environ 2 et 5 mm au dessus de la face extérieure 5 pour des tuyaux ayant une épaisseur de paroi de l'ordre de 0,1 à 1 mm et entre 4 et 8 mm pour des tuyaux ayant une épaisseur de paroi de l'ordre de 1 à 2 mm.

On notera également que l'organe saillant 10 comprend une extrémité libre présentant de préférence une forme arrondie.

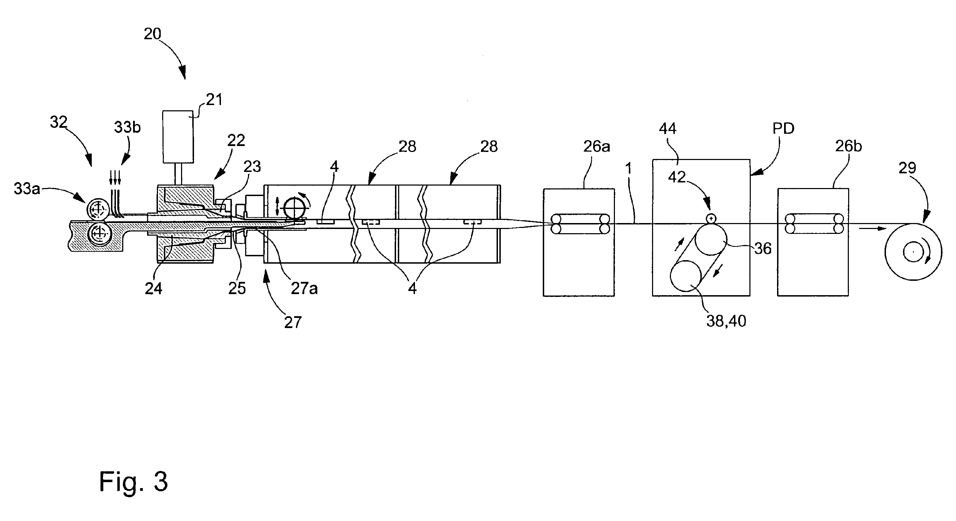

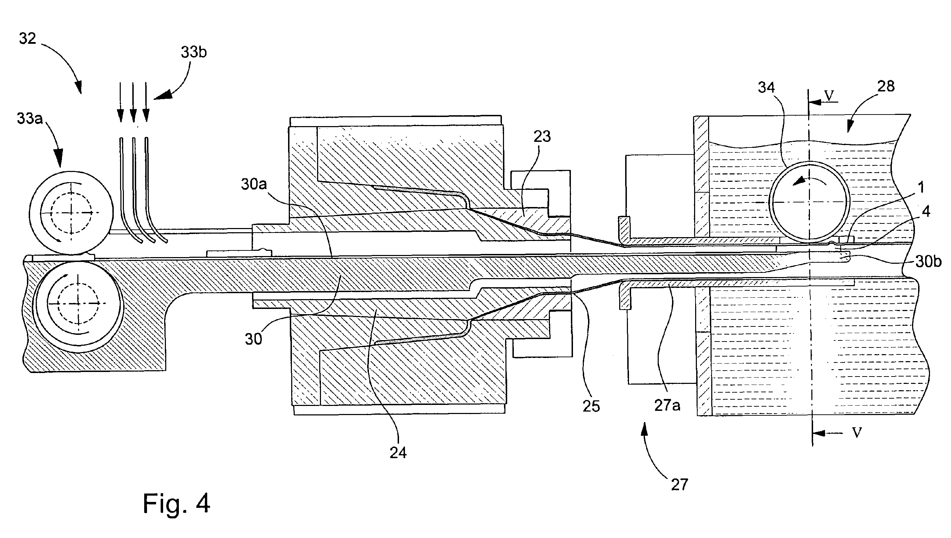

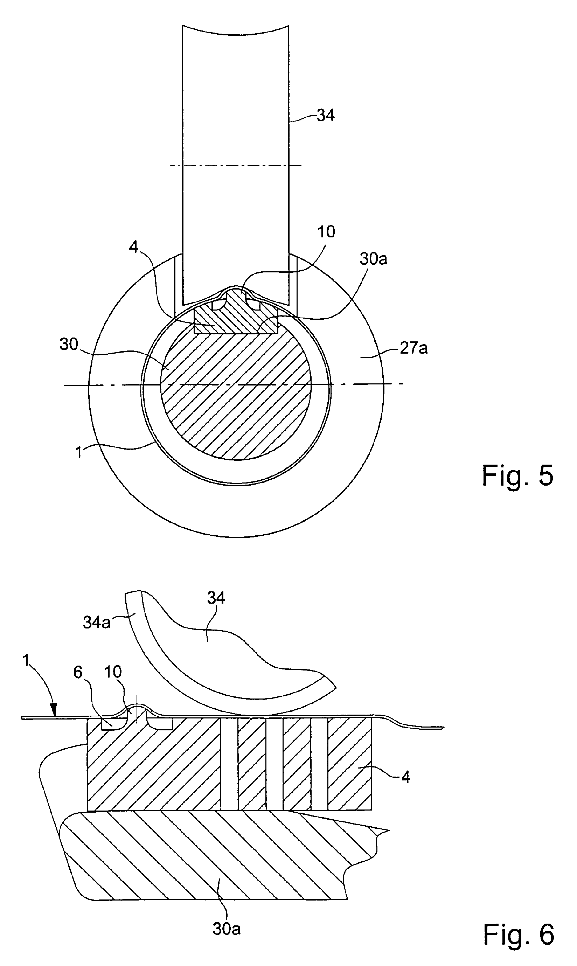

Si l'on se réfère maintenant aux figures 3 à 6, on constate que l'appareillage de fabrication du tube 1 comprend un poste d'extrusion 20, comprenant une chambre de fusion 21 de la matière plastique, qui alimente un ensemble 22 pourvu d'une filière 23, à l'intérieur de laquelle est prévu un mandrin conique 24, disposé de telle façon qu'il sort de la filière une ébauche tubulaire 25.

L'ébauche 25 est tirée par des postes de traction 26a, 26b, en passant à travers un poste de calibrage 27 et des chambres de refroidissement 28 et à travers un poste de découpe PD qui sera décrit plus en détail ci-après. Au-delà du poste de traction 26b, le tuyau est enroulé sur un tambour 29.

Une telle disposition est classique dans la technique de fabrication des tuyaux en matière plastique.

Pour fixer les goutteurs 4, il est prévu que le mandrin 24 présente un passage axial à l'intérieur duquel est disposé un support de guidage 30 comprenant un chemin de guidage 30a dont l'extrémité libre 30b s'étend jusqu'à l'intérieur du calibreur 27a du poste de calibrage 27. Le support de guidage 30 reçoit des goutteurs 4 à partir d'un dispositif d'alimentation 31.

Un dispositif de déplacement 32, muni dans l'exemple représenté de galets 33a entraîneurs assisté par des jets d'air 33b, est prévu pour faire avancer les goutteurs 4, provenant d'un magasin (non représenté), jusqu'à l'intérieur du calibreur 27a. Les dimensions de la pièce de guidage 30 sont calculées pour que, à cet endroit, l'ébauche de tuyau 25, dont le diamètre est réduit par le calibreur 27a, vient en contact avec le goutteur 4 au moment où elle est encore pâteuse, ce qui assure le thermo-soudage de la face supérieure 5 du goutteur contre la paroi intérieure de l'ébauche. Pour encore améliorer la mise en contact de la face supérieure du goutteur 5 avec la paroi intérieure de l'ébauche, le calibreur 27a est associé à un galet presseur 34 réglable en hauteur et tournant à une vitesse synchronisée avec la vitesse de défilement du tuyau. Le galet 34 presse le tuyau et les goutteurs 4 contre le chemin de guidage 30a. Une disposition analogue est déjà connue notamment de la demande de brevet EP No 03405609 incorporée ici par référence. On notera également que le galet presseur 34 peut également comprendre un garnissage 34a souple à sa surface de contact afin d'épouser au mieux la forme qu'imprime la face 5 du goutteur au tuyau et notamment la forme de l'organe saillant 10.

En sortant des postes de calibrage 27 et de refroidissement 28, le tuyau 1 présente à sa surface extérieure et au droit de chaque goutteur une protubérance P engendrée par l'écrasement de la paroi du tuyau sur l'organe saillant 10 et s'étendant au dessus de la surface de la paroi extérieure du tuyau. Le tuyau 1 ainsi conformé pénètre dans le poste de découpe PD, via le premier poste de traction 26a puis en sort pour pénétrer dans le deuxième poste de traction 26b. Les vitesses d'avance de ces postes de traction sont choisies pour que le tuyau soit suffisamment tendu afin qu'il s'aplatisse de manière optimale dans le poste de découpe PD qui va être décrit ci-après.

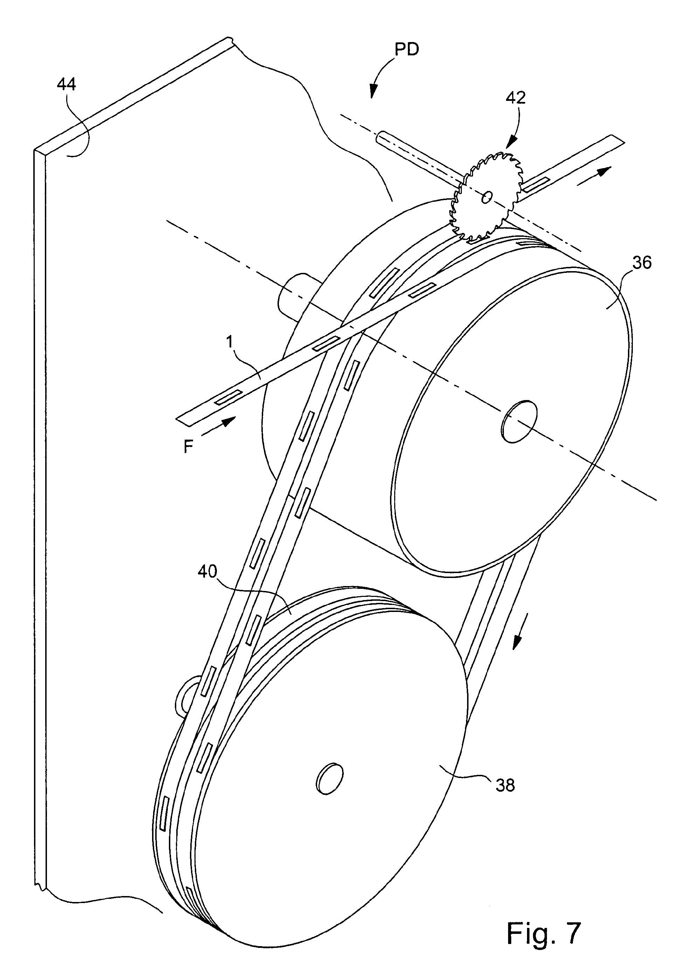

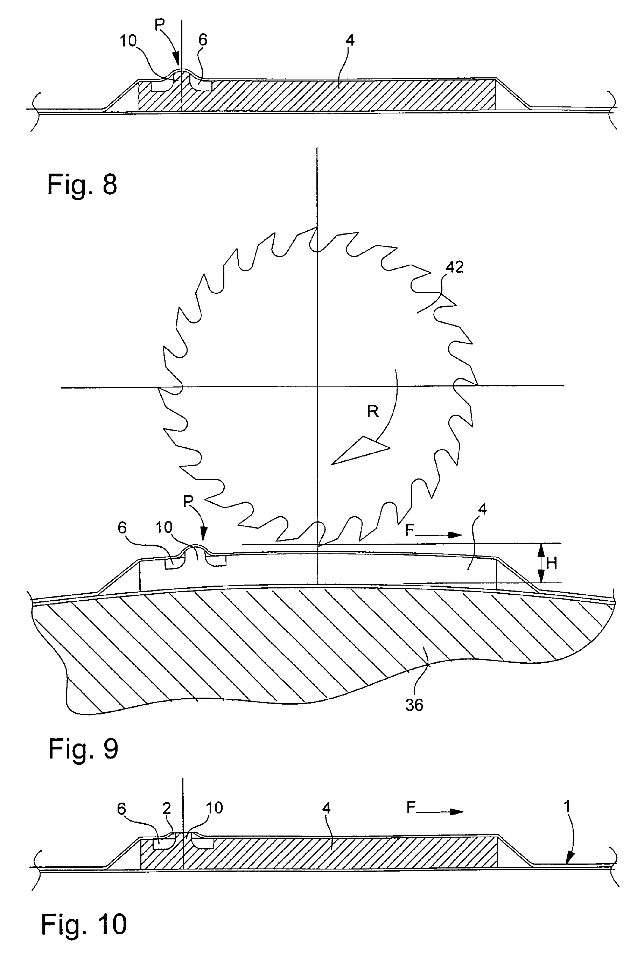

En se référant également aux figures 7 à 10 on voit que le tuyau 1 entre dans le poste de découpe dans le sens de la flèche F en passant sur un tambour 36 puis sur des poulies de renvoi 38, 40 afin de le faire défiler devant un outil de coupe 42. On a représenté à la figure 8 en coupe la configuration d'une section de tuyau 1 comprenant un goutteur 4 juste avant l'entrée du tuyau dans le poste de découpe PD. On peut voir que le tuyau 1 est aplatie et présente une bosse à l'endroit du goutteur 4 ainsi qu'une protubérance P au droit de la chambre de collecte 6, la protubérance étant provoquée par l'organe saillant 10.

Le tambour 36 et les poulies 38, 40 sont montés à rotation sur un bâti 44 du poste de découpe. Le tambour 36 présente une surface 36a cylindrique ayant une largeur correspondant sensiblement à plusieurs largeurs du tuyau dans sa configuration aplatie. On notera à ce propos que cette surface 36a peut être revêtue d'une couche antidérapante par exemple en caoutchouc pour améliorer l'entraînement du tuyau et son maintien en tension sur le tambour 36. Dans l'exemple représenté, le tuyau arrive dans une région antérieure du tambour 36 sur laquelle il s'enroule partiellement, puis est dirigé vers la poulie 38. Depuis cette dernière le tuyau est à nouveau redirigé de biais vers le tambour 36 sur lequel il s'enroule partiellement dans une région médiane de ce dernier. Le tuyau est ensuite redirigé vers la poulie 40 et depuis cette dernière est à nouveau dirigé de biais vers le tambour 36 sur lequel il s'enroule partiellement dans une région postérieure, à partir de laquelle il quitte le poste de découpage tiré par le deuxième poste de traction 26b. Le tambour 26 et les poulies 38, 40 sont monté libres à rotation sur leurs axes respectifs et sont par conséquent entraînés par les postes de traction 26a, 26b. Cet arrangement permet d'atteindre une tension optimale du tuyau 1 dans ce poste sans toutefois allonger le tuyau.

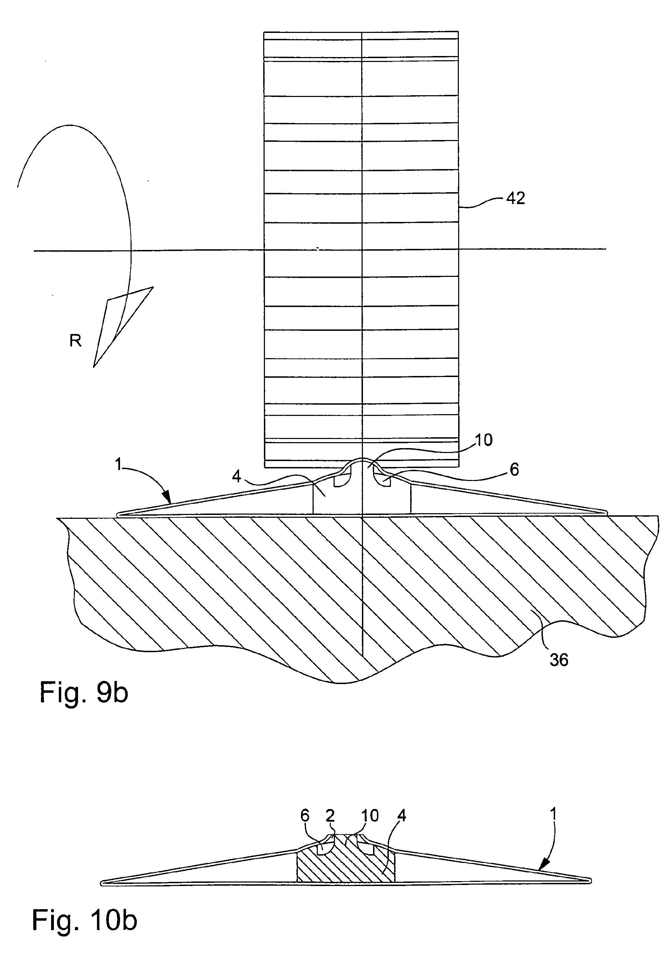

Dans l'exemple représenté aux figures 7 à 10, l'outil de découpe 42 est un outil rotatif monté à rotation sur le bâti 44 et dont l'axe de rotation s'étend parallèlement à l'axe de rotation A du tambour 36 et sensiblement aligné sur cet axe A. L'outil 42 est typiquement une fraise dont la largeur de coupe est sensiblement supérieure à la largeur du tuyau dans sa configuration aplatie. Cet outil s'étend au dessus de la surface cylindrique 36a du tambour 36 sur le chemin de défilement du tuyau 1 et à une hauteur H déterminée à partir de la surface 36a (figures 9a et 9b). Plus précisément, l'outil de coupe 42 s'étend au-dessus de la région d'enroulement médiane du tuyau 1 à une distance suffisante de la surface 36a pour que les arêtes de coupe de l'outil 42 rencontrent le chemin de défilement des protubérances P et les étêtent sans risquer d'endommager le tuyau à l'endroit des goutteurs. Comme la hauteur des protubérances P dépend essentiellement de la hauteur de l'organe saillant 10 et de l'épaisseur de la paroi du tuyau 1, l'outil 42 est monté sur le bâti de manière à être réglable en hauteur au dessus de la surface 36a. On notera également que le sens de rotation R de l'outil rotatif 42 est tel que la direction de coupe de l'outil est opposée au sens de défilement du tuyau 1. On notera également à ce propos que la surface 36a forme une surface d'appui cylindrique pour le tuyau 1 permettant de cintrer le tuyau 1 et le goutteur 4 au moment de l'opération de découpe des protubérances. Ce cintrage présente l'avantage d'accentuer la saillie des protubérances P et ainsi de faciliter l'opération de découpe de celles-ci.

Dans le poste de découpe, l'outil 42 coupe la partie supérieure de l'organe saillant qui se trouve au dessus de la face extérieure 5 du goutteur 4 ainsi qu'une portion de paroi du tuyau 1 qui recouvre cet organe 10. Par l'opération de découpe et comme cela est représenté aux figures 10a et 10b, les chambres de collecte 6 sont mises en communication avec l'extérieur par des orifices de décharge 2 crées par l'élimination des sections du tuyau recouvrant les organes saillants. On notera également dans ces figures qu'en l'absence de circulation de fluide dans le tuyau, le bord de chaque orifice de décharge 2 s'appuie, compte tenu de la nature élastique de la paroi du tuyau, sur le corps de l'organe saillant 10 des goutteurs 4. Par ailleurs lorsqu'un fluide sous pression circule dans le tuyau, la pression du fluide écarte le bord de chaque orifice 2 de l'organe saillant 10 et ouvre un passage pour le fluide. Le bord de chaque orifice 2 en liaison avec l'organe saillant 10 tronqué forme ainsi un dispositif à clapet permettant notamment d'empêcher des saletés de pénétrer dans la chambre de collecte.

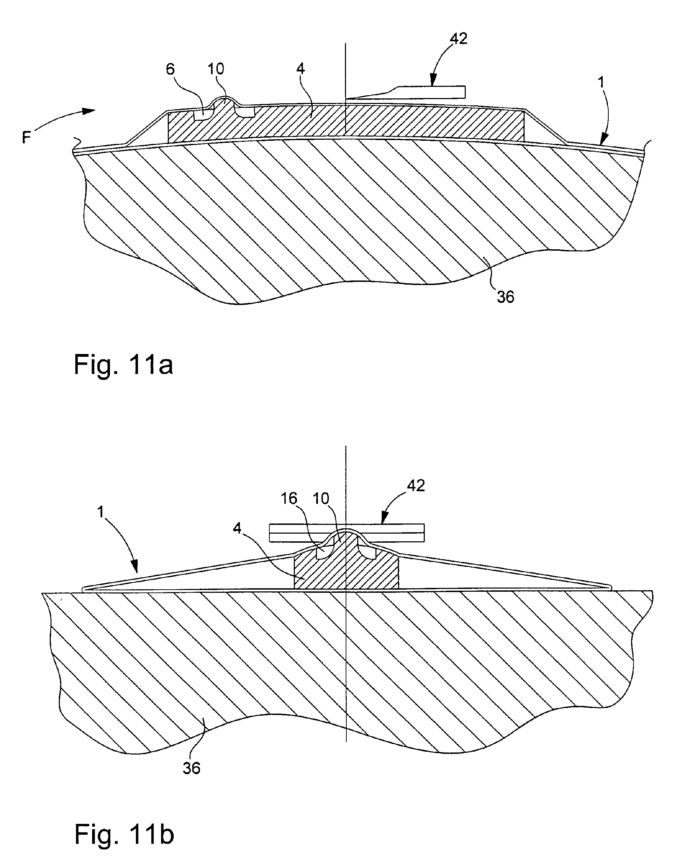

Aux figures 11a et 11b on a représenté une variante de réalisation du poste de découpe de l'installation selon l'invention dans laquelle les éléments déjà décrits en liaison avec les figures précédentes sont désignés par les mêmes références numériques. Dans cette variante seule la nature de l'outil de coupe 42 a été modifiée. Selon cette variante l'outil de coupe 42 est formé d'une lame fixe dont l'arête de coupe est disposée sur le chemin de défilement des protubérances P.

L'invention n'est bien entendu pas limitée aux modes de réalisation décrits ci-dessus et on comprendra que diverses modifications et/ou améliorations évidentes pour l'homme de métier pourront y être apportées sans sortir du cadre de l'invention définie par les revendications annexées.

## Revendications

1. Goutteur pour un tuyau d'irrigation goutte-à-goutte (1) le goutteur comprenant un corps ayant une face extérieure destinée à venir en contact avec la paroi intérieure du tuyau et une face intérieure orientée vers l'intérieur du tuyau, et dans lequel ladite face extérieure comporte une chambre de collecte ouverte en direction de la paroi intérieure du tuyau pour communiquer avec un orifice de décharge ménagé dans ladite paroi du tuyau, ledit goutteur comprenant en outre des moyens d'écoulement prévus dans ledit corps pour former un passage dans lequel un liquide peut s'écouler entre ladite face intérieure et ladite chambre de collecte, **caractérisé en ce que** la chambre de collecte comprend un organe saillant faisant saillie au-delà de ladite face extérieure.

2. Goutteur selon la revendication 1 dans lequel la chambre de collecte comprend un fond s'étendant sensiblement parallèlement à ladite face extérieure, et dans lequel ledit organe saillant s'étend à partir dudit fond.

3. Goutteur selon la revendication 1 ou 2, **caractérisé en ce que** ledit organe saillant vient de matière avec le corps du goutteur.

4. Goutteur selon l'une des revendications précédentes, **caractérisé en ce que** l'organe saillant s'étend entre environ 2 et 5 mm au-delà de ladite face extérieure.

5. Goutteur selon l'une des revendications précédentes, **caractérisé en ce que** ledit organe saillant a une extrémité libre présentant une forme arrondie.

6. Tuyau d'irrigation goutte-à-goutte comportant une pluralité d'orifices de décharge espacés les uns des autres le long de sa longueur et une pluralité de goutteurs selon l'une quelconque des revendications 1 à 5, lesdits goutteurs étant fixés à la paroi intérieure dudit tuyau de manière que la chambre de collecte de chaque goutteur soit en regard d'un orifice de décharge.

7. Tuyau d'irrigation selon la revendication 6, **caractérisé en ce que** le bord de chaque orifice de décharge vient en contact avec l'organe saillant du goutteur auquel il est associé pour former avec cet organe saillant un dispositif à clapet.

8. Procédé de fabrication de tuyaux d'irrigation goutte-à-goutte, **caractérisé en ce qu'**il comprend les opérations consistant à :
préparer un tuyau continu par extrusion dans une extrudeuse ou un poste d'extrusion,
- se munir de goutteurs comprenant sur une face extérieure une chambre de collecte comprenant un organe faisant saillie au delà de ladite face extérieure, lesdits goutteurs comprenant en outre des moyens d'écoulement pour former un passage dans lequel un liquide peut s'écouler entre une face intérieure du goutteur et ladite chambre de collecte,
- introduire successivement les goutteurs à l'intérieur dudit tuyau au cours de l'extrusion,
fixer à chaud lesdits goutteurs, par leur surface extérieure, à la paroi intérieure du tuyau en formation les uns après les autres pour que les organes saillants desdits goutteurs forment des protubérances à la surface extérieure du tuyau,
- refroidir ledit tuyau et
- découper successivement lesdites protubérances pour former des orifices de décharge mettant ladite chambre de collecte en communication avec l'extérieur.

9. Procédé selon la revendication 8, comportant en outre une étape de calibrage du tuyau dans un calibreur et dans lequel l'étape de fixation à chaud des goutteurs est exécutée en aval dudit calibreur.

10. Procédé selon la revendication 8 ou 9, **caractérisé en ce que** le tuyau est cintré pour faire émerger les protubérances à découper simultanément à l'étape de découpe.

11. Procédé selon la revendication 10, **caractérisé en ce que** l'étape de cintrage est réalisée en faisant passer le tuyau muni des goutteurs sur une surface d'appui cylindrique.

12. Procédé selon l'une des revendications 8 à 11, **caractérisé en ce que** l'étape de découpe est réalisée soit par une lame fixe soit par un couteau rotatif disposé sur le chemin de défilement des protubérances.

13. Installation d'extrusion destinée à la fabrication d'un tuyau d'irrigation goutte à goutte conformément au procédé selon les revendications 9 à 12, **caractérisée en ce qu'**elle comprend :
- un poste d'extrusion comprenant une tête d'extrusion ayant un alésage central et dans laquelle une ébauche de tuyau est formée ;
- un poste de calibrage comprenant un calibreur disposé en aval de la tête d'extrusion et dans lequel l'ébauche de tuyau est amenée à des dimensions sensiblement définitives,
- des moyens de traction disposés en aval du poste de calibrage pour tirer le tuyau extrudé à travers le calibreur et l'extraire de ce dernier,
- un support pour des goutteurs disposés dans ledit alésage central, ledit support ayant une première extrémité disposée à l'intérieur dudit alésage et reliée à des moyens d'alimentation en goutteurs et une deuxième extrémité opposée disposée au moins jusque dans ledit calibreur ou dans une région d'entrée dudit calibreur,
- des moyens d'acheminement desdits goutteurs pour amener lesdits goutteurs les uns après les autres en contact avec la paroi intérieure pour assurer le thermo-soudage de la face supérieure des goutteurs à la paroi intérieure du tuyau,
- un poste de refroidissement dans lequel le tuyau est refroidi, et
un poste de découpe disposé en aval du poste de refroidissement comprenant un outil de coupe fixe ou rotatif disposé sur le chemin de défilement des protubérances du tuyau.

14. Installation selon la revendication 13, **caractérisée en ce que** le poste de découpe comprend une surface d'appui sur laquelle le tuyau repose pour cintrer le tuyau au moment de l'opération de découpe et **en ce que** ladite surface d'appui est disposée sensiblement en regard dudit outil de coupe.

15. Installation selon la revendication 14, **caractérisée en ce que** ladite surface d'appui est formée d'un tambour sur lequel le tuyau s'enroule au moins partiellement.

16. Installation selon la revendication 15, **caractérisé en ce que** ledit tambour est motorisé et forme lesdits moyens de traction dudit tuyau.
